Europäisches Patentamt

European Patent Office

Office européen des brevets

(11) Numéro de publication: **0 425 343 A1**

## DEMANDE DE BREVET EUROPEEN

(21) Numéro de dépôt: 90402914.7

(22) Date de dépôt: **17.10.90**

(51) Int. Cl.⁵: **C03B 9/32**, C03B 9/16

(30) Priorité: **23.10.89 FR 8913857**

(43) Date de publication de la demande:
**02.05.91 Bulletin 91/18**

(84) Etats contractants désignés:
**AT BE CH DE DK ES FR GB GR IT LI LU NL SE**

(71) Demandeur: **VERRERIES POCHET ET DU COURVAL**
**121 quai de Valmy, BP 272**
**F-75464 Paris Cédex 10(FR)**

(72) Inventeur: **Varlet, Hubert**
**85, rue Chardon Lagache**
**F-75016 Paris(FR)**

(74) Mandataire: **Grosset-Fournier, Chantal Catherine et al**
**ERNEST GUTMANN-YVES PLASSERAUD S.A.,**
**67 boulevard Haussmann**
**F-75008 Paris(FR)**

(54) **Dispositif et procédé de moulage pour cols de récipients.**

(57) Il s'agit d'un dispositif de moulage pour cols de récipients et d'un procédé mettant en oeuvre un tel dispositif, comportant une pièce (4) évidée de bout en bout pour former un alésage (5), ledit alésage comprenant une portion d'extrémité (6) de moulage de la face externe (7) du col, et un élément (9) coopérant jointivement avec l'alésage (5) et comprenant une extrémité (10) propre à coiffer le col du récipient, l'extrémité (10) comporte une saillie (12) de révolution autour de l'axe (13) de l'alésage, dirigée dans le sens dudit axe et propre à mouler la face interne dudit col, l'élément (9) est agencé pour coopérer de façon coulissante dans la pièce (4) entre une position de moulage où la saillie est introduite dans ladite portion d'extrémité (6) d'alésage, et une position d'effacement où la saillie est en retrait par rapport à ladite portion d'extrémité (6) d'alésage. Des moyens (15) de déplacement de l'élément (9), dans la pièce (4), entre ces deux positions sont prévus.

FIG.1

# DISPOSITIF ET PROCEDE DE MOULAGE POUR COLS DE RECIPIENTS

La présente invention concerne un dispositif de moulage pour cols de récipients, comportant une pièce évidée de bout en bout par un alésage, ledit alésage comprenant une portion d'extrémité de moulage de la face externe du col, et un élément propre à être logé jointivement dans l'alésage et comprenant une extrémité propre à coiffer le col du récipient.

Elle concerne également un procédé mettant en oeuvre un tel dispositif.

L'invention trouve une application particulièrement importante, bien que non exclusive, dans le domaine de la fabrication automatique de flacons ou de pots en verre, tels que ceux utilisés par exemple pour des parfums ou des produits de beauté. Mais l'invention est également applicable, par exemple, à la fabrication d'autres types de récipients présentant une ouverture circulaire.

Les dispositifs de fabrication en automatique ou semi-automatique de flacons ou de bouteilles connus, comprennent généralement un poste d'ébauchage du flacon qui comporte un moule vertical ou ébaucheur, terminé en partie basse par un dispositif de moulage du col comportant une pièce de moulage de la face externe du col, communément dénommé moule de bague, et une partie ou élément coiffant qui coopère avec ladite pièce ou moule de bague.

L'ébaucheur est alimenté par le haut avec du verre en fusion qui vient s'écraser sur le dispositif de moulage du col, au travers duquel on insuffle de l'air pour gonfler l'intérieur du flacon; le col est alors moulé par le moule de bague et l'élément coiffant.

Une fois l'ébauchage du flacon effectué, l'ébaucheur est ouvert; l'ébauche du flacon est transférée et simultanément retournée de 180° par un bras de transfert rotatif, solidaire du moule de bague enserrant le col du flacon, sur un poste de finissage du flacon. Un moule de finissage est alors refermé sur l'ébauche du flacon dans lequel on injecte à nouveau de l'air pour lui donner sa forme définitive.

Il existe deux types de dispositifs connus pour le moulage de cols de flacons au poste d'ébauchage.

Le premier type de dispositif comporte d'une part, une pièce de moulage et de préhension de la face externe du col du récipient, pièce, communément désignée par la dénomination "moule de bague", qui est solidaire du bras de transfert, et d'autre part un dé de moulage, dit dé "coiffant", propre à créer une amorce de moulage de la face interne du col, qui reste fixé au poste d'ébauchage. Le dé de moulage comporte une lèvre circulaire agencée pour coiffer ou recouvrir le bord supérieur du col du flacon en lui donnant une forme déterminée par moulage.

Ce premier type de dispositif ne permet pas le moulage interne du col de flacon sur une hauteur supérieure à de l'ordre du millimètre, et/ou n'autorise pas de dépouille sensiblement verticale ou présentant un angle faible par rapport à la verticale, pour ladite face interne dudit col.

En effet, si la lèvre circulaire du dé "coiffant" pénétrait trop profondément dans l'ouverture du col, le mouvement rotatif que l'on fait subir au flacon pour le transférer vers le poste de finissage, provoquerait la cassure du col au moment de l'arrachage du flacon du poste d'ébauchage.

Le deuxième type de dispositif connu comporte une pièce de moulage et de préhension de la face externe du col similaire au premier type. Il est par contre muni non pas d'un dé fixé au poste d'ébauchage, mais d'un élément communément désigné par la dénomination "rondelle coiffante", solidaire de la pièce de moulage et de préhension et propre à coiffer le col du flacon; l'élément comporte une lèvre circulaire agencée pour recouvrir le bord supérieur du col. Cependant, la hauteur de la lèvre est ici encore structurellement limitée en dimension, pour éviter tout risque de cassure, du fait de la dilatation différentielle entre l'élément, qui est métallique, et le col de verre, pendant le temps de transfert entre les postes d'ébauchage et de finissage, où le col et l'élément restent en contact.

La présente invention permet d'éviter ces inconvénients. Elle vise à fournir un dispositif et un procédé répondant mieux que ceux antérieurement connus aux exigences de la pratique, notamment en ce qu'ils autorisent le moulage de la face interne du col de récipients sur une hauteur plus importante que dans l'art antérieur, pouvant atteindre plusieurs millimètres, et ce avec une dépouille verticale ou sensiblement verticale, sans pour autant risquer de briser les cols desdits récipients. Le procédé peut être entièrement automatique, et permet des cadences particulièrement rapides.

Dans ce but, l'invention propose notamment un dispositif de moulage de cols de récipients, comportant une pièce évidée de bout en bout pour former un alésage, ledit alésage comprenant une portion d'extrémité de moulage de la face externe du col, et un élément coopérant jointivement avec l'alésage, ledit élément comprenant une extrémité propre à coiffer le col du récipient, caractérisé en ce que ladite extrémité propre à coiffer le col comporte une saillie de révolution autour de l'axe d'alésage, dirigée dans le sens dudit axe et propre à mouler la face interne dudit col,

en ce que l'élément est agencé pour coopérer de façon coulissante dans la pièce entre une position de moulage où la saillie est introduite dans ladite portion d'extrémité d'alésage, et une position d'effacement où la saillie est en retrait par rapport à ladite portion d'extrémité d'alésage et,

en ce que le dispositif comporte des moyens de déplacement de l'élément entre ces deux positions.

Dans des modes de réalisation avantageux on a recours en outre à l'une et/ou à l'autre des dispositions suivantes :

- la saillie de révolution autour de l'axe d'alésage a une hauteur supérieure à de l'ordre de 2 mm;
- la saillie de révolution a une hauteur supérieure à de l'ordre de 5 mm;
- la saillie de révolution présente une face de contact avec le col du récipient sensiblement parallèle à l'axe de l'alésage, coïncidant avec celui de l'ouverture du récipient;
- la saillie de révolution présente une face de contact avec le col du récipient formant un angle inférieur à de l'ordre de 20° par rapport à l'axe de l'alésage;
- l'élement est maintenu solidaire de la pièce;
- l'élément est monté de façon amovible par rapport à la pièce;
- les moyens de déplacement de l'élément à l'intérieur de l'alésage comprennent des moyens élastiques agencés pour repousser la saillie de l'extrémité de l'élément en dehors de la portion d'extrémité d'alésage de la pièce, ainsi que des moyens mécaniques de compression de ces moyens élastiques propres à introduire ladite saillie dans ladite portion d'extrémité d'alésage, quand lesdits moyens mécaniques sont actionnés.

L'invention propose également un procédé de moulage d'un col de récipient en verre dans lequel après introduction du verre en fusion dans un moule d'ébauchage,

on réalise le moulage de la face externe du col du récipient et de la face interne dudit col sur une hauteur supérieure à de l'ordre de 2 mm et avantageusement supérieure à 5mm, tout en insufflant de l'air dans l'ébauche de récipient;

on désengage entièrement du col du récipient, le moule de la face interne dudit col, et

on transfère le récipient en le maintenant par la face externe du col à un poste de finissage du récipient pour lui donner sa forme définitive.

Dans un mode de réalisation avantageux, le moulage interne du col du récipient se fait avec une dépouille sensiblement verticale, ou encore avec un angle inférieur à de l'ordre de 20° par rapport à l'axe d'ouverture du récipient.

Avantageusement, le moule de la face interne du récipient est transféré au poste de finissage simultanément au transfert du récipient.

L'invention sera mieux comprise à la lecture de la description qui suit d'un mode particulier de réalisation, donné à titre d'exemple non limitatif.

La description se réfère aux dessins qui l'accompagnent dans lesquels :

- La figure 1 montre deux demi-coupes longitudinales d'un mode de réalisation du dispositif selon l'invention, l'une montrant le dispositif dans la position de moulage de la face interne du col du récipient, et l'autre dans la position de transfert du récipient.
- La figure 2 montre schématiquement le dispositif de la figure 1 muni d'un flacon au poste d'ébauchage et, à une plus grande échelle, le flacon tel qu'il se présente au poste de finissage après l'évacuation du dispositif selon l'invention.
- La figure 3 est un schéma de principe montrant le déplacement du dispositif représenté en demi-coupe, entre le poste d'ébauchage et le poste de finissage.

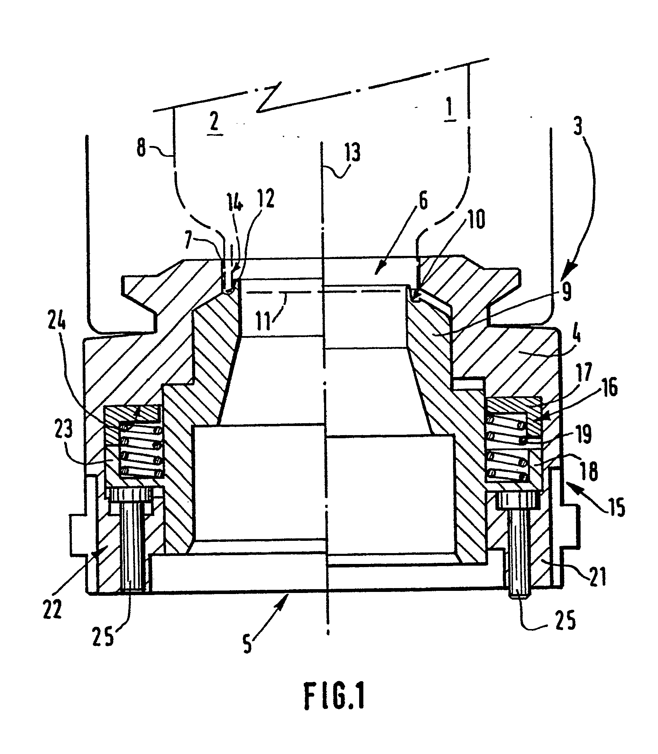

On a représenté sur la figure 1, deux demi-coupes longitudinales 1 et 2 d'un mode de réalisation du dispositif 3 selon l'invention appliqué au moulage d'un col de flacon.

La demi-coupe 1 montre le dispositif en position de moulage, la demi-coupe 2 le montrant en position de transfert du flacon.

Le dispositif 3 comprend un élément 4 de moulage, évidé de bout en bout pour former un alésage 5 comprenant une portion d'extrémité 6 de moulage de la face externe 7 d'un flacon 8, représenté en traits interrompus sur la figure 1. Le dispositif 3 comprend également un élément 9 solidaire de la pièce 4, logé jointement dans l'alésage 5 et comprenant une extrémité 10 propre à coiffer le col 11 du récipient 8.

L'alésage 5 comprend par exemple plusieurs portions cylindriques et/ou coniques agencées, par exemple, comme représenté sur la figure 1.

L'extrémité 10 de l'élément 9 comporte une saillie ou lèvre 12 de révolution autour de l'axe 13 de l'alésage 5, dirigée dans le sens dudit axe 13 d'une hauteur suffisante pour la rendre propre à mouler la face interne 14 du col 11 du flacon sur une distance supérieure à 2 mm, par exemple 5 à 6 mm, pouvant atteindre 1 cm, voir plus, dans le sens de l'axe 13. Par hauteur de saillie il faut entendre la longueur de la dimension de la saillie dans le sens de l'axe 13, par rapport à sa base sur l'extrémité 10.

L'élément coiffant 9 est monté coulissant dans l'alésage 5, entre une position de moulage (voir demi-coupe 1) où la saillie de révolution pénètre dans la portion d'extrémité d'alésage 6, pour mouler la face interne du col 11 du flacon, et une position d'effacement (voir demi-coupe 2) où la saillie 12 est en retrait par rapport à ladite portion d'extrémité d'alésage 6, de sorte qu'elle n'est plus en contact avec la face interne du col 11.

Le dispositif 3 comporte en outre des moyens 15 de déplacement de l'élément 9 dans la pièce 4 entre les deux positions ci-dessus mentionnées. Ces moyens comprennent par exemple des moyens élastiques 16, propres à coopérer d'un côté avec des moyens de butée 17 solidaires de la pièce 4 et de l'autre côté avec des moyens de butée 18 solidaires de l'élément 9, de sorte que l'élément est repoussé vers le côté opposé à la portion 6 d'extrémité d'alésage, en mettant la saillie en position d'effacement, par lesdits moyens élastiques. Les moyens élastiques sont par exemple avantageusement constitués par des ressorts à boudins 19 angulairement répartis, par exemple au nombre de six.

Afin d'éviter à l'élément 9 de sortir en cours de fonctionnement de la pièce 4, des moyens 22 de rétention de l'élément 9 dans la pièce 4 sont prévus.

Sur la figure 1 l'élément 9 comporte une excroissance périphérique 23 qui se déplace dans une encoche 24 pratiquée dans la pièce 4, entre les deux positions de fonctionnement. L'excroissance 23 est par exemple constituée par une couronne annulaire munie d'une paroi externe cylindrique, ouverte vers le haut pour former une encoche dont le fond constitue les moyens de butée 18 des ressorts 19, l'encoche 24 étant elle-même constituée par un évidemment annulaire cylindrique, dans la pièce 4, de plus grande hauteur.

Les moyens de déplacement de l'élément 9 entre les deux positions de fonctionnement comprennent également des poussoirs 25 constitués par exemple par des tiges cylindriques coopérant jointement dans des alésages cylindriques d'axes parallèles à l'axe 13, percés dans la portion d'extrémité de la pièce 4 opposée à sa position d'extrémité de moulage de la face externe du col; en position de "repos", ces tiges présentent une saillie en dehors de la pièce 4. Les tiges comprennent des extrémités supérieures agencées pour coopérer avec les moyens de butée 18 de l'élément 9 et exercer une action sur les ressorts 19 lorsque les saillies des tiges sont repoussés par exemple par la face supérieure d'une pièce de support fixée au poste d'ébauchage, sur laquelle la pièce 4 vient reposer lors de l'ébauchage d'un récipient.

D'autres moyens de déplacement de l'élément 9 par rapport à la pièce 4 peuvent bien évidemment être prévus et sont à la portée de l'homme du métier. Par exemple, il peut être prévus des moyens électriques ou pneumatiques pour déplacer l'élément 9 par rapport à la pièce 4 entre les deux positions, lors de la réalisation d'un récipient.

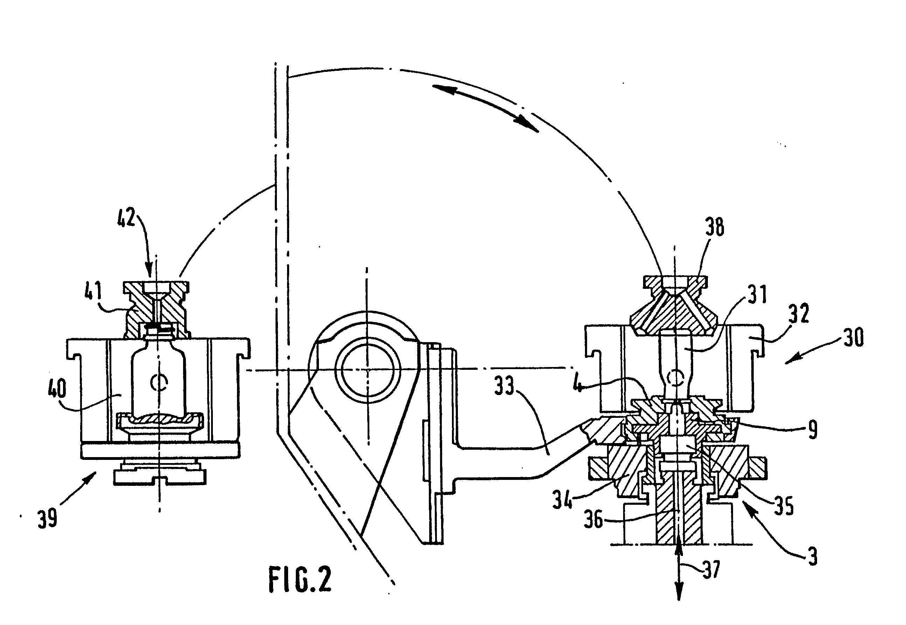

La figure 2 montre le dispositif 3 selon le mode de réalisation de l'invention plus particulièrement décrit ici, en coupe verticale, en position au poste d'ébauchage 30 d'une machine de fabrication de flacons en verre, classique, souvent connue sous la dénomination de machine dite "IS". Le flacon 31 a été formé dans le moule d'ébauchage 32 représenté en position ouverte sur la partie droite de la figure 2; le dispositif 3 selon l'invention comprend le pièce 4 propre à mouler la face externe du col du flacon et l'élément 9 coopérant jointement avec un alésage pratiqué dans la pièce 4, propre à mouler la face interne du col du flacon.

La pièce 4 est fixée à un bras de transfert 33; en position d'ébauchage, la pièce 4 repose sur une pièce 34 fixe, par l'intermédiaire des éléments poussoirs 25 qui compriment les ressorts 19, ce qui permet à la saillie 12 de venir en position de moulage de la face interne du col du flacon.

Un piston 35 vient aider à la formation de l'ouverture du col du flacon 31. Un canal 36 traverse le piston 35 et permet le passage de l'air insufflé pour gonfler le flacon 31. Le piston est amené à monter et descendre lors de l'ébauche comme indiqué sur la figure 2 par la flèche 37.

Une pièce 38 permet de complèter le moule d'ébauche 32 pour permettre le moulage du fond du récipient 31. Cette pièce 38 est ensuite évacuée lorsque le flacon est transféré par le bras de transfert vers le poste de finissage représenté schématiquement en 39 à une échelle légèrement plus importante que celle utilisée pour représenter le poste d'ébauchage.

Le flacon est alors emprisonné dans le moule 40, que l'on voit représenté ouvert sur la figure 2; ce moule 40 est le moule de finissage. La pièce 41 est une pièce qui peut être substituée ou non au moule de bague ou pièce 4 et qui permet en insufflant de l'air via l'arrivée 42 de donner au flacon sa forme définitive dans le moule de finissage.

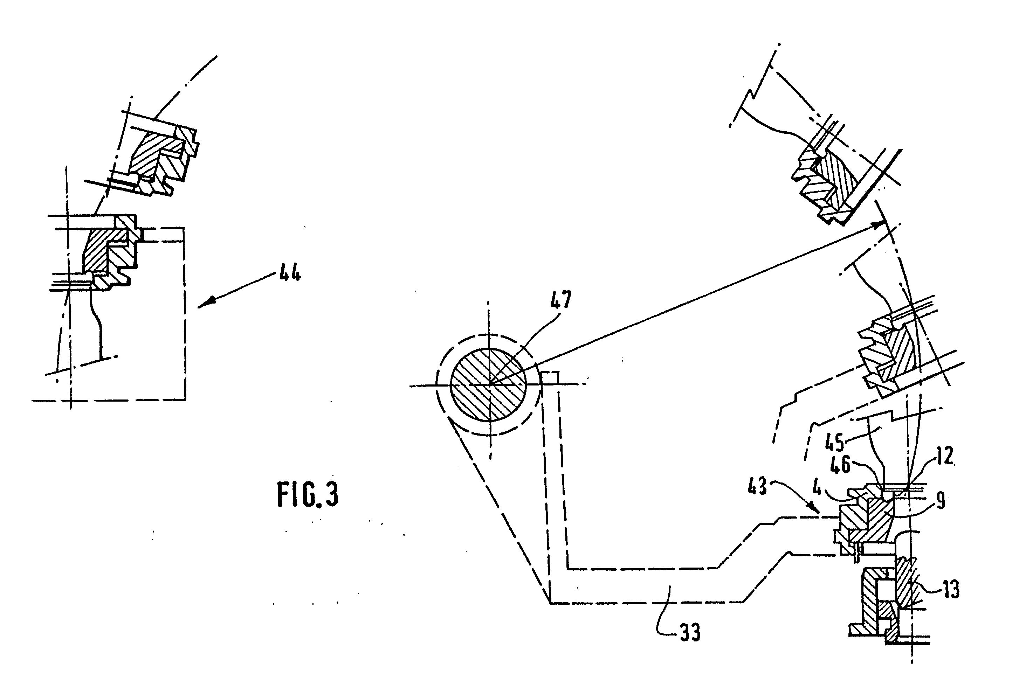

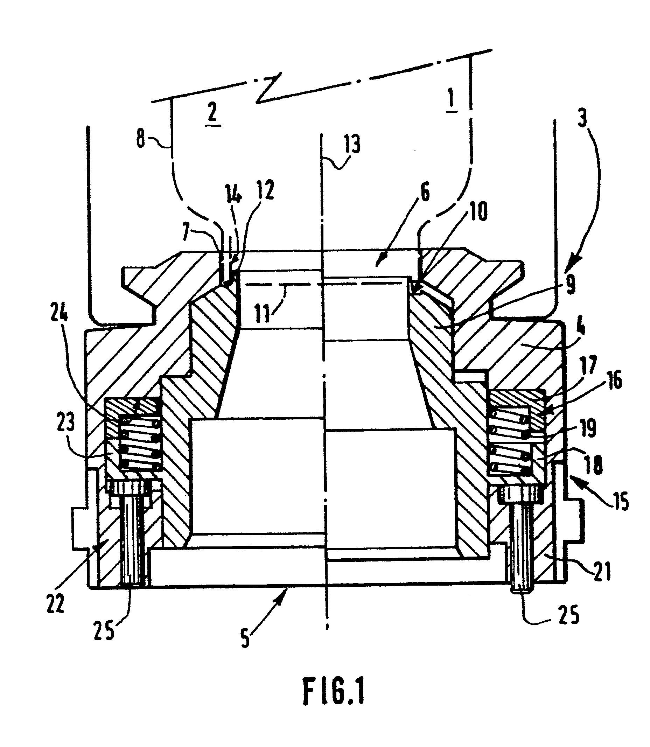

Sur la figure 3 on a représenté schématiquement, partiellement et en coupe, un dispositif selon l'invention, entre sa position au poste d'ébauchage 43, et sa position au poste de finissage 44; Une partie du flacon 45 est également représentée. La figure 3 permet de visualiser les positions respectives de la pièce 4 et de l'élément 9 lors du moulage d'un flacon, puis lors de son transfert vers le poste de finissage.

On va maintenant décrire le procédé de mise en oeuvre de dispositif selon l'invention appliqué au moulage d'un flacon, en se référant aux figures 2 et 3.

De façon, automatique ou semi-automatique, on dirige gravitairement une goutte de verre dans le moule d'ébauchage préalablement mise place au poste d'ébauchage. La goutte de verre vient alors s'écraser sur le moule de bague ou pièce 4 réalisé selon l'invention. La température du verre est à ce moment là par exemple de l'ordre de 1100° C; il est donc particulièrement maléable. On vient ensuite mettre en place, (voir figure 2) un bouchon 38 de fond de récipient.

Le dispositif selon l'invention moule le col du flacon, le piston 35 en complète la formation; on insuffle, via le canal 36, de l'air pour gonfler le flacon, qui prend ainsi sa forme dite forme en "ebauche".

On retire alors le fond de l'ébaucheur et le moule d'ébauchage ou "ébaucheur" est ouvert.

Le flacon n'est alors plus maintenu que par l'intermédiaire de son col, enserré entre la pièce 4 et l'élément 9.

Puis, l'élément 9 s'éfface de sorte que la saillie 12 de révolution autour de l'axe 13 (voir figure 3) adopte sa position de retrait par rapport à la portion d'extrémité d'alésage 6 de moulage de la face externe du col 46 du flacon 45. La saillie n'est donc plus en contact avec l'intérieur de l'ouverture du col du flacon et ne risque donc plus lorsque le transfert va être initié, et le flacon de verre va se refroidir, de créer des contraintes dues à la dilatation différentielle entre verre et métal, aboutissant à la rupture du col du récipient.

Le bras de transfert 33 qui est fixé à la pièce 4 évacue ensuite le flacon de façon circulaire, autour de l'axe 47, et amène le flacon au poste de finissage 44.

On referme alors, le finisseur ou moule de finissage sur l'ébauche de flacon; et la pièce 4 est ouverte et évacuée.

La commande automatique de toutes ces opérations est effectuée de façon connue en soi, par exemple, par l'intermédiaire d'un automate programmable. Le bras de transfert 33 repart ensuite vers le poste d'ébauchage afin de permettre le moulage du flacon ou récipient suivant.

Simultanément à cette opération, la tête de soufflage 41 ou tête de gonflage est connectée au moule finisseur (voir figure 2). On souffle alors l'ébauche de flacon pour lui donner sa forme définitive. La tête de soufflage 41 est ensuite évacuée, et des pincettes (non représentées) viennent par exemple prendre le flacon par le col en même temps que le moule finisseur s'ouvre. On évacue enfin le flacon de façon connue en elle-même.

Comme il va de soi, et comme il résulte d'ailleurs de ce qui précède l'invention n'est pas limitée au mode de réalisation plus particulièrement décrit ici. Elle en concerne au contraire toutes les variantes et en particulier :

- le cas où les moyens de déplacement de l'élément 9 par rapport à la pièce 4 sont constitués par des moyens pneumatiques ou électriques;
- le cas où le dispositif est utilisé pour la fabrication de récipients en matériau différent du verre, par exemple en matière plastique dure, en céramiques, ou autres matériaux moulés.
- le cas où l'élément 9 reste solidaire du poste d'ébauchage, et n'est donc pas transféré au poste de finissage en même temps que la pièce 4.

## Revendications

1. Dispositif de moulage pour cols de récipients, comportant une pièce (4) évidée de bout en bout pour former un alésage (5), ledit alésage comprenant une portion d'extrémité (6) de moulage de la face externe (7) du col, et un élément (9) coopérant jointivement avec l'alésage (5) et comprenant une extrémité (10) propre à coiffer le col du récipient, ladite extrémité (10) propre à coiffer le col comportant une saillie (12) de révolution autour de l'axe (13) de l'alésage, dirigée dans le sens dudit axe et propre à mouler la face interne dudit col, et l'élément (9) étant agencé pour coopérer de façon coulissante dans la pièce (4) entre une position de moulage où la saillie est introduite dans ladite portion d'extrémité (6) d'alésage, caractérisé en ce que le dispositif comporte des moyens (15) de déplacement de l'élément (9), dans la pièce (4), entre ces deux positions, la saillie (12) ayant une hauteur supérieure à de l'ordre de 2mm, et en ce que l'élément (9) est solidaire de la pièce (4).

2. Dispositif selon la revendication 1, caractérisé en ce que la saillie (12) a une hauteur supérieure à de l'ordre de 5 mm.

3. Dispositif selon l'une quelconque des revendications précédentes, caractérisé en ce que la saillie (12) présente une face de contact avec le col du récipient sensiblement parallèle à l'axe de l'alésage.

4. Dispositif selon l'une quelconque des revendications précédentes, caractérisé en ce que la saillie (12) présente une face de contact avec le col du récipient formant un angle inférieur à de l'ordre de 20° par rapport à l'axe de l'alésage.

5. Dispositif selon l'une quelconque des revendication précédentes, caractérisé en ce que les moyens (15) de déplacement de l'élément (9) à l'intérieur de l'alésage (5) comprennent des moyens élastiques (19) agencés pour repousser la saillie (12) de l'extrémité (10) de l'élément (9) en dehors de la portion d'extrémité (6) d'alésage de la pièce (4), ainsi que des moyens (25) mécaniques, de compression de ces moyens élastiques propres à introduire ladite saillie dans ladite portion d'extrémité (6) d'alésage, quand lesdits moyens mécaniques sont actionnés.

6. Dispositif selon l'une quelconque des revendications précédentes, caractérisé en ce que les moyens de déplacements des éléments entre ces deux positions sont pneumatiques.

7. Procédé de moulage d'un col de récipient dans lequel, après introduction du verre en fusion dans un moule d'ébauchage, on réalise le moulage de la face externe du col du récipient et de la face interne dudit col sur une hauteur supérieure à de l'ordre de 2 mm et avantageusement supérieure à 5 mm, avec un angle inférieur à de l'ordre de 20° par rapport à l'axe de l'ouverture du récipient, et avantageusement sensiblement parallèle audit axe, tout en insufflant de l'air dans l'ébauche de récipient; on dégage entièrement du col du récipient, le moule de la face interne dudit col tout en conservant en contact le moule de la face externe dudit col avec ladite face externe, et

on transfert le récipient en le maintenant par la face externe du col à un poste definissage du récipient pour lui donner sa forme définitive.

8. Procédé de moulage selon la revendication 7, caractérisé en ce que l'on transfert le moule de la face interne du col du récipient au poste de finissage du flacon, simultanément au transfert du récipient.

FIG.1

FIG.2

EP 0 425 343 A1

FIG.3

EP 0 425 343 A1

FIG.1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-C-6 882 65   (K.A. ZUMPE)<br>* le document en entier *<br>– – – | 1-7 | C 03 B<br>9/32<br>C 03 B 9/16 |
| A | DE-C-6 187 50   (GLASWERKE RUHR AG)<br>* le document en entier *<br>– – – | 1-7 | |
| A | FR-A-4 900 88   (L.V. LOCKWOOD)<br>* le document en entier *<br>– – – | 1-7 | |
| A | PATENT ABSTRACTS OF JAPAN vol. 7, no. 248<br>(C-193)(1393) 4 novembre 1983,<br>& JP-A-58 135140 (ISHIZUKA GLASS K.K.) 11 août 1983,<br>* le document en entier *<br>– – – | 1-7 | |
| A | US-A-1 843 160   (H.W. INGLE)<br>* revendications 1-37; figures 13-21 *<br>– – – – – | 8 | |

|  | DOMAINES TECHNIQUES RECHERCHES (Int. Cl.5) |
|---|---|
|  | C 03 B |

Le présent rapport de recherche a été établi pour toutes les revendications

| Lieu de la recherche | Date d'achèvement de la recherche | Examinateur |
|---|---|---|
| Berlin | 30 janvier 91 | KUEHNE H C |